# EUROPEAN PATENT APPLICATION

(11) **EP 2 523 392 A1**
(43) Date of publication of application: **14.11.2012**
(21) Application number: 12167564.9
(22) Date of filing: 10.05.2012
(51) Int. Cl.: H04L 12/26

(54) **System and method for unified polling of networked devices and services**

(30) Priority: 10.05.2011 US 201113104663
(71) Applicant: Monolith Technology Services, Inc., St Charles, IL 60175 (US)
(72) Inventor: Ennis, Shawn Patrick, ST CHARLES, IL Illinois 60175 (US); Gent, Michael John, PLANO, TX Texas 75024 (US); Jetmore, John Isaac, RICHMOND, IN Indiana 47374 (US)
(74) Representative: Pelly, Jason Charles

(57) **Abstract**

The present invention provides methods, systems and computer readable media for unified polling of networked devices and services. A system for unified polling of networked devices and services according to one embodiment comprises one or more pollers in communication with one or more devices, the one or more pollers operative to request and perform one or more polling tasks of the one or more devices. The system further comprises a unified poller in communication with the plurality of pollers, the unified poller operative to receive requests for one or more polling tasks; determine priorities of the one or more polling tasks; and assign one or more threads to control the one or more pollers on the basis of the priorities of the one or more polling tasks.

## Description

### COPYRIGHT NOTICE

A portion of the disclosure of this patent document contains material, which is subject to copyright protection. The copyright owner has no objection to the facsimile reproduction by anyone of the patent document or the patent disclosure, as it appears in the Patent and Trademark Office patent files or records, but otherwise reserves all copyright rights whatsoever.

### FIELD OF THE INVENTION

The invention described herein generally relates to the management and control of status requests sent to devices and services on a network, which may take the form of one or more polling events, by a unified poller.

### BACKGROUND OF THE INVENTION

Monitoring the status of various assets, both hardware and software, is essential and used in various environments. Examples include inventory systems, for topology mapping, monitoring of internet services, etc. A given network may include various components or devices that provide functions or services. These components may require periodic monitoring to maintain service integrity. Examples of criteria that may be monitored include testing for functionality, availability, responsiveness, etc.

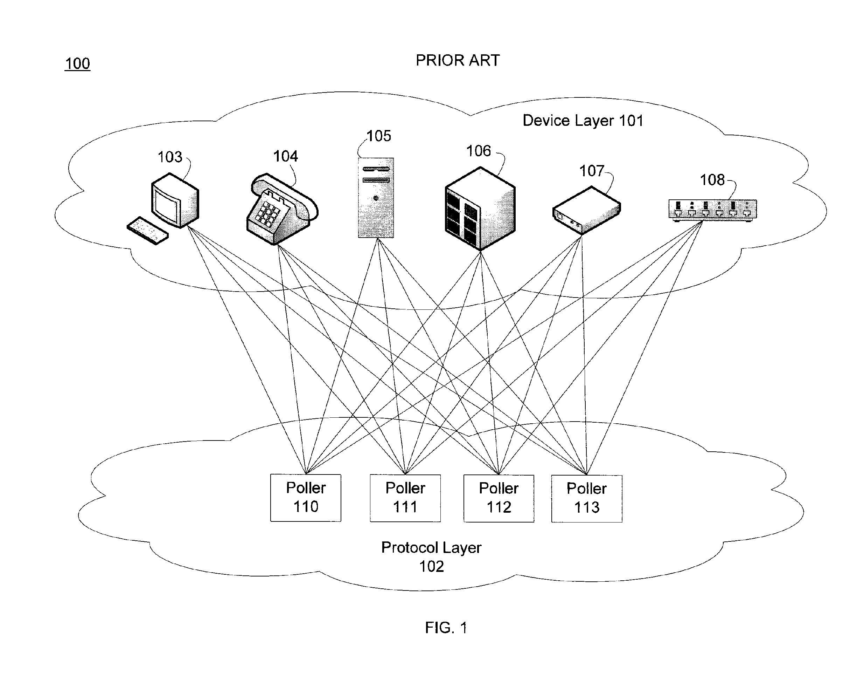

Monitoring tools and systems may implement a plurality of device and service specific pollers that perform various, disparate polling tasks; a given poller may communicate with devices and services connected to the network using various different protocols. Fig. 1 depicts an example of an architecture typically deployed for monitoring various devices and services. FIG. 1 illustrates a system 100 including device and service specific pollers 110, 11, 112 and 113 operating within protocol layer 102. The plurality of pollers 110, 11, 112 and 11s3 may communicate with and poll devices and services 103, 104, 105, 106 107 and 108 within the device layer 101 simultaneously, at random intervals or combinations thereof.

Existing systems such as those depicted in Fig. 1 suffer from certain limitations, including lack of coordination between the various pollers, which may simultaneously monitor different interfaces, services or functionality of a same device. In certain situations multiple pollers may even poll the same device to obtain the same or redundant data. A given device or service 103, 104, 105, 106 107 and 108 within device layer 101 provides various functions or services and are not deployed on the network merely to respond to pollers. Such repetitive and unpredictable polling consumes valuable resources, which might otherwise be used for providing services.

Currently existing systems for monitoring do not efficiently manage monitoring tasks for a plurality of pollers. There is thus a need to unify and manage polling tasks for better coordination and efficiency in handling monitoring events.

### SUMMARY OF THE INVENTION

The present invention provides a methods, systems and computer readable media for unified polling of networked devices and services. According to one embodiment, system for unified polling of networked devices and services comprises one or more pollers in communication with one or more devices, the one or more pollers operative to request and perform one or more polling tasks of the one or more devices. The system further comprises a unified poller in communication with the plurality of pollers, the unified poller operative to receive requests for one or more polling tasks; determine priorities of the one or more polling tasks; and assign one or more threads to control the one or more pollers on the basis of the priorities of the one or more polling tasks.

According to one embodiment, the unified poller is further operative to schedule the one or more polling tasks on the basis of an amount of resources available at the one or more devices. Furthermore, the polling tasks may be scheduled, automated or triggered by one or more events. The one or more pollers may be instructed to perform the one or more polling tasks upon assignment of the one or more threads, and the unified poller may be further operative to manage the one or more threads.

According to one embodiment, the unified poller is further operative to assign weights to the priorities, a given weight based on a polling task completion time. The determined priorities may be based on one or more device profiles, and the unified poller may be operative to adjust the determined priorities according to a result of a prior polling task. Finally, the unified poller may be operative to limit the amount of concurrent polling tasks performed on a given device.

A method for unified polling of networked devices and services according to one embodiment of the present invention comprises receiving requests for one or more polling tasks at a unified poller, determining priorities of the one or more polling tasks and assigning, by the unified poller, one or more threads to control the one or more pollers on the basis of the priorities of the one or more polling tasks. One or more pollers are controlled to perform the one or more polling tasks of the one or more devices

According to one embodiment, the method comprises scheduling the one or more polling tasks on the basis of an amount of resources available at the one or more devices. Scheduling, automating or triggering the polling tasks in response to the occurrence of one or more events. The one or more pollers may be instructed to perform the one or more polling tasks upon assignment of the one or more threads, and the method may further comprise managing the one or more threads.

According to one embodiment, weights are assigned to the priorities, a given weight based on a polling task completion time. Determining priorities may be made on the basis of one or more device profiles and may comprise adjusting the determined priorities according to a result of a prior polling task. The method may further comprise limiting the amount of concurrent polling tasks performed on a given device.

### BRIEF DESCRIPTION OF THE DRAWINGS

Embodiments of the invention are illustrated in the figures of the accompanying drawings which are meant to be exemplary and not limiting, in which like references are intended to refer to like or corresponding parts, and in which:

FIG. 1 illustrates a system for monitoring devices according to the prior art;

FIG. 2 presents a architecture diagram illustrating a computing system for the management of monitoring events according to one embodiment of the present invention;

FIG. 3 presents a block diagram illustrating the components comprising a unified poller according to one embodiment of the present invention;

FIG. 4 presents a block diagram illustrating a polling scheduler for use by a unified poller in managing monitoring events according to one embodiment of the present invention;

FIG. 5 presents a flow diagram illustrating a method for scheduling management events, such as polling tasks, according to one embodiment of the present invention;

FIG. 6 presents a flow diagram illustrating a method for scheduling polling tasks to worker threads according to one embodiment of the present invention;

FIG. 7 presents a flow diagram illustrating a method for scheduling polling tasks on the basis of polling task and device type according to one embodiment of the present invention.

### DETAILED DESCRIPTION OF THE INVENTION

In the following description of the embodiments of the invention, reference is made to the accompanying drawings that form a part hereof, and in which is shown by way of illustration, exemplary embodiments in which the invention may be practiced. It is to be understood that other embodiments may be utilized and structural changes may be made without departing from the scope of the present invention.

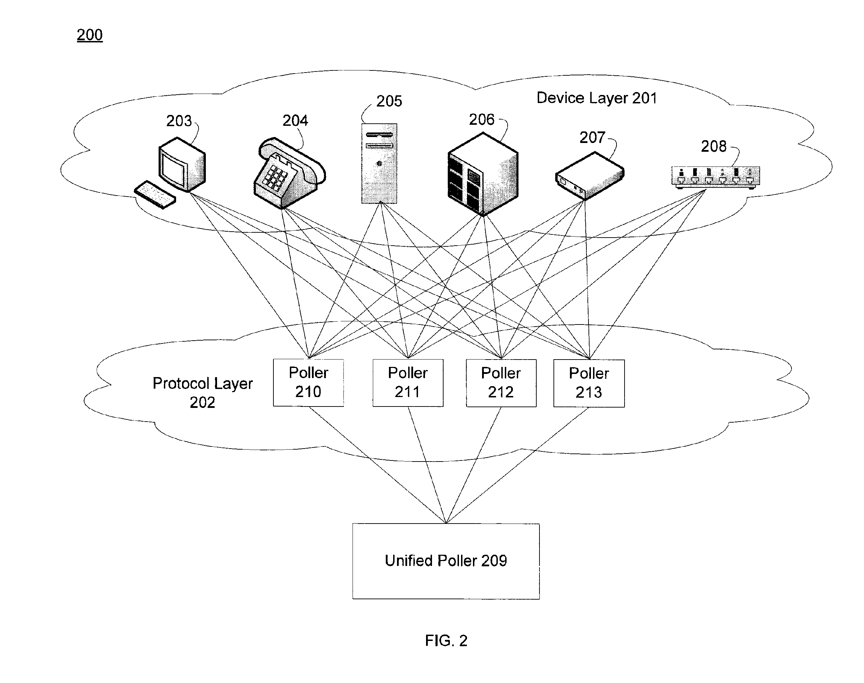

FIG. 2 illustrates one embodiment of a system 200 for unified polling, which includes devices and services 203, 204, 205, 206, 207 and 208 operating within a device layer 201 in bi-directional communication with one or more pollers 210, 211, 212 and 213 within a protocol layer 202. The system 200 of FIG. 2 further comprises a unified poller 209 in bi-directional communication with the one or more pollers 210, 211, 212 and 213. It should also be recognized by those of skill in the art that the device layer 201 and protocol layer 202 are logical constructs and that the device layer 201 and protocol layer 202, as well as the unified poller 209, may exist as nodes or services on one or more networks that facilitate communication there between. The one or more networks may be any suitable type of network allowing transport of inter- and intra-network data communications. In accordance with one embodiment, the network may be the Internet, following known Internet protocols for data communication, or any other communication network, such as any local area network (LAN), wide area network (WAN) or combination of the two. The devices and services 203, 204, 205, 206, 207 and 208 in the device layer 201 are exemplary in nature and may be hardware, software or a combination of both. Examples of devices and services 203, 204, 205, 206, 207 and 208 in device layer 201 include, but are not limited to, terminals, workstations, telephone devices, modems, servers, mainframes, private branch exchanges ("PBX"), media storage devices, switches, routers, electronic mail, FTP servers, directories, etc.

Protocols supported in protocol layer 202 may include Simple Network Management Protocol ("SNMP"), Internet Control Message Protocol ("ICMP"), Windows Management Instrumentation ("WMI") Remote Protocol, Transaction Language 1 ("TL1"), the Trans protocol ("TRANS"), Simple Object Access Protocol ("SOAP"), Java Management Extension ("JMX"), Telnet, Secure Shell ("SSH"), Hypertext Transfer Protocol ("HTTP"), Domain Name System ("DNS"), Light Weight Directory Access Protocol ("LDAP"), Simple Mail Transfer Protocol ("SMTP"), File Transfer Protocol ("FTP"), etc. Protocols (not illustrated) that pollers 210, 211, 212 and 213 implement in protocol layer 202 may each correspond to one or more devices or services 203, 204, 205, 206, 207 and 208 in device layer 201. Pollers 210, 211, 212 and 213 are operative to provide monitoring functions by testing or executing polling tasks or portions of polling tasks of the supported protocols for devices in device layer 201. Pollers may include an application or client for performing testing tasks or processes, components and instruction code for execution by a processing device to perform the testing processes. Services associated with a given protocol may be monitored by communication with one or more devices in the device layer 201 corresponding to the protocol. One exemplary poller is an Internet Service Monitor, which may test the performance of the ICMP running on a network. Likewise, a ping poller may ping a target host or device and wait for a response.

Unified poller 209, as illustrated, implements a bi-directional interface with one or more pollers 210, 211, 212 and 213. Although unified poller 209 is illustrated as existing outside of protocol layer 202, it may exist either within protocol layer 202 or sit on top of the pollers or the protocol layer 202. In one embodiment, unified poller 209 may act as an intermediary between the pollers 210, 211, 212 and 213 and devices and services 203, 204, 205, 206, 207 and 208. According to one embodiment, the unified poller 209 may serve as a manager of the one or more pollers 210, 211, 212 and 213. More specifically, unified poller 209 may schedule and manage various management or polling tasks, and may further optimize the executing of such tasks. In addition, unified poller 209 may monitor or receive activity/status information or other data responsive to a given poll to aid in coordinating subsequent polling tasks executed the various pollers 210, 211, 212 and 213in the in the protocol layer 202.

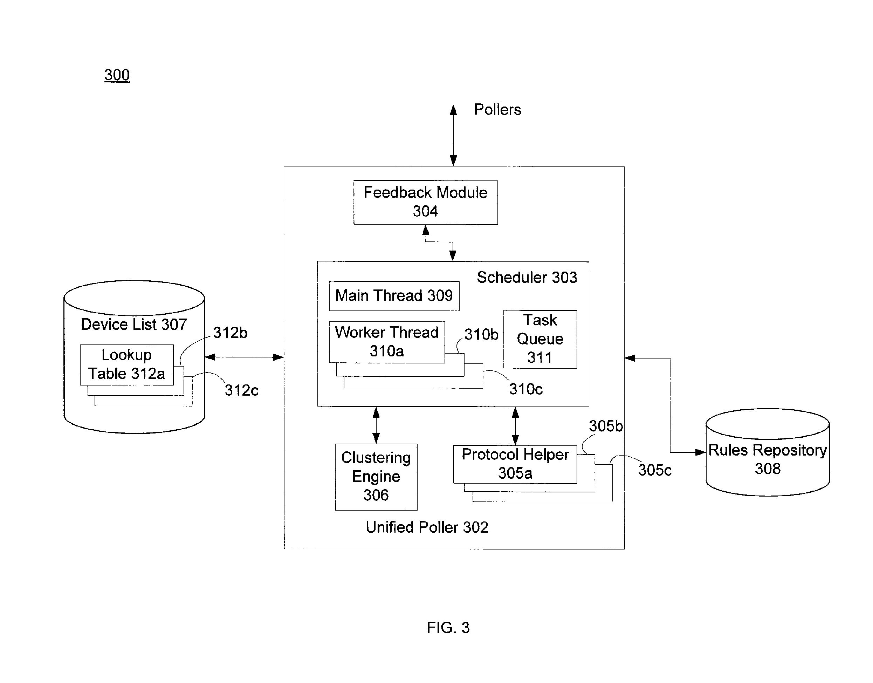

FIG. 3 presents a block diagram illustrating the unified poller in greater detail according to one embodiment of the present invention, as we. According to the embodiment of FIG. 3, the unified poller 302 may be in communication with one or more data stores, e.g., a device list 307 and a rules repository 308. Unified poller 302 communicates with pollers to automate and manage the timing and execution of polling tasks. According to one embodiment, the unified poller 302 may listen for polling tasks or requests. Upon detecting and receiving a polling task, unified poller 302 may also determine a device type associated with the polling task by querying device list 307. Device list 307 may include lookup tables 312a, 312b and 312c, which contain entries for various devices and attribute information associated with the various devices. Lookup tables 312a, 312b and 312c may comprise a hash structure or any other tabular structures known by one of ordinary skill in the art to maintain the device information.

Attribute information associated with the various devices and services may comprise device identifier, type, address, protocol, time required to perform a certain task, communication speed, function, configuration, topology, etc. A device may be identified according to the attribute information, which may be used to create one or more poll handles according to rules stored in a rules repository 308. According to one embodiment, a poll handle is a pointer or reference to one or more specific instructions for carrying out a polling task or a portion of a polling task by a given one of the pollers. Rules stored in rules repository 308 may include device profiles created according to a device type. A given device profile may define one or more customized polls to execute according to predefined conditions specified by customers. Device profiles may further include a customer-specified priority that may be used to determine or override a default priority for a polling task.

Unified poller 302, which may comprise multiple hardware and software subsystems, may further comprise a scheduler 303, feedback module 304, one or more protocol helpers 305a, 305b and 305c (collectively referred to as 305), and clustering engine 306. Scheduler 303 may perform scheduling and coordination of polling tasks. Because a given protocol may require different sets of rules and messages, the unified poller 302 may use a given protocol helper 305 to serve as an interface and provide code or functions to facilitate communications between the pollers on the one hand, and devices and services on the other. The protocol helpers 305 may each include helper functions specific to a given protocol used by worker threads 310 to poll a device or service in accordance with the given protocol.

Clustering engine 306 may cluster weights assigned to polling tasks either universally or on a per protocol basis. According to one embodiment, polling tasks associated with a given protocol may be given more weight over other tasks. Weights may be generated from information stored in lookup tables 312a, 312b and 312c. The information stored in the lookup tables 312a, 312b and 312c may serve as heuristic information, e.g., the time required to perform a certain task, for use in generating the weights. In addition, weights may also be assigned to polling tasks on basis of polling task type or the device associated with a request. According to one embodiment, weights are representative of the amount of time it would take to complete a request. Such weights may affect a default priority of a given polling task by either increasing or decreasing its priority. The resulting priority of the given polling task can be used by scheduler 303 to determine the scheduling of the given polling task. In this manner, redundant or unnecessary polling tasks may be disregarded.

Feedback module 304 may receive input or output information from pollers to determine a next course of action for the scheduler 303 to take. The feedback module 304 may include either deterministic or non-deterministic algorithms in response to the poller information. In one embodiment, based on the information received from feedback module 304, the scheduler may delay or cancel polling tasks based on the result or outcome of previously executed polling tasks. Delaying or re-prioritizing polling tasks may be based on customer rules from rules repository 308 or predefined scheduling rules according to device profiles. For example, if a "ping" operation is sent to a target device and is non-responsive, a subsequent SNMP query operation to the same target device may not be performed.

Scheduler 303 may further comprise main thread 309, worker threads 310a, 310b and 310c (collectively referred to as 310), and a task queue 311. The unified poller 302 may receive polling tasks for storage on task queue 311. Task queue 311 provides temporary storage of polling tasks for processing at a later time. Task queue 311 may be any data structure performing the function of a buffer including, but not limited to linked lists, stacks, arrays, binary trees, heaps, etc. Tasks may be stored or re-arranged on task queue 311 by scheduler 303 according to any scheduling algorithm including, but not limited to First in First Out ("FIFO"), round-robin, priority based, deadline based, least amount of time required for task, or any combination thereof. Polling tasks stored on task queue 311 may be de-queued and assigned to worker threads 310.

Worker threads 310 may each perform different polling tasks, running concurrently. According to one embodiment, a worker thread is a single processing unit that scheduler 303 can schedule to carry out program instructions for a given task, with a given worker thread in a ready, running, waiting, sleep or dead state. Worker threads 310 in the ready state are available to accept polling tasks. When polling tasks are assigned to a given worker thread 310, the worker thread goes into a running state and is unavailable to execute another task. A worker thread in waiting state may be waiting for another worker thread to perform a particular action before it can continue. From the example above, a SNMP query operation assigned to worker thread 310b may be in a waiting state because it is waiting for a ping operation assigned to worker thread 310a to complete. A worker thread may also be put into a sleeping state where it is paused or delayed for a given amount of time (which may be articulated by a given rule in the rules repository 308). A worker thread in a dead state is terminated either after it has completed execution of a polling task or if an exception is thrown.

In one embodiment, main thread 309 distributes tasks to worker threads available to complete a task. The worker threads carry out polling tasks using the aforementioned poll handles. A worker thread may run an instance of the poller associated with a given poll handle and perform the polling task. Each of these polling tasks is viewed as a task for which certain resources are identified and tracked. Main thread 309 may monitor and keep track of tasks assigned to each worker thread 310 with instances of resource monitoring and management within scheduler 303 also assigned thereto. Main thread 309 may also be responsible for dynamically creating and terminating worker threads 310, and may further be configured to manage a given number of concurrent worker threads running at a given point in time, as a function of time, etc.

In a multithreaded system such as the embodiment that FIG. 3 illustrates, concurrent tasks may each be accommodated with worker threads 310 to achieve multitasking or multithreading. Multithreading is a technique which allows for execution of multiple threads concurrently. Embodiments of the present invention may include a single processor or a multiprocessor system. In single processor or single-core embodiments, only one thread (either main thread 309 or a worker thread 310) may run at any given time. Single processor multithreading may be achieved by scheduler 303 allocating each thread a time-slice or quantum. A thread quantum is the amount of time a thread is allowed to run before scheduling a different thread to run. While one thread is running, other concurrent threads wait to be given a turn and threads executing tasks of higher importance or priority may be given a larger quantum. In an alternative embodiment, threads associated with tasks requiring shorter completion times may be given a larger quantum to complete.

On a multiprocessor or multi-core system, different threads or tasks may actually run at the same time in parallel with a given processor may execute a particular thread or task. In one embodiment, main thread 309 may be assigned to run on a dedicated processor while worker threads 310 share computing resources of processors dedicated to worker threads. In another embodiment, processing for all the threads may be equally divided among all available processors or cores. Scheduler 303 may support time-sliced threading, multiprocessor threading, or various combinations.

In general, unified poller may act as a gateway controlling polling traffic to one or more devices at a given instance, which in effect separates the pollers from the protocol layer. The unified poller may be adjusted to increase or decrease the number of executing polling tasks based on traffic to the devices. For example, when traffic or resource usage for a given device is low, the scheduler 303 may increase the number of worker threads performing polling tasks to the device. Conversely, if a device is low on resources, scheduler 303 may allocate fewer worker threads to the device and even put currently running threads to sleep for a length of time or until traffic levels have decreased.

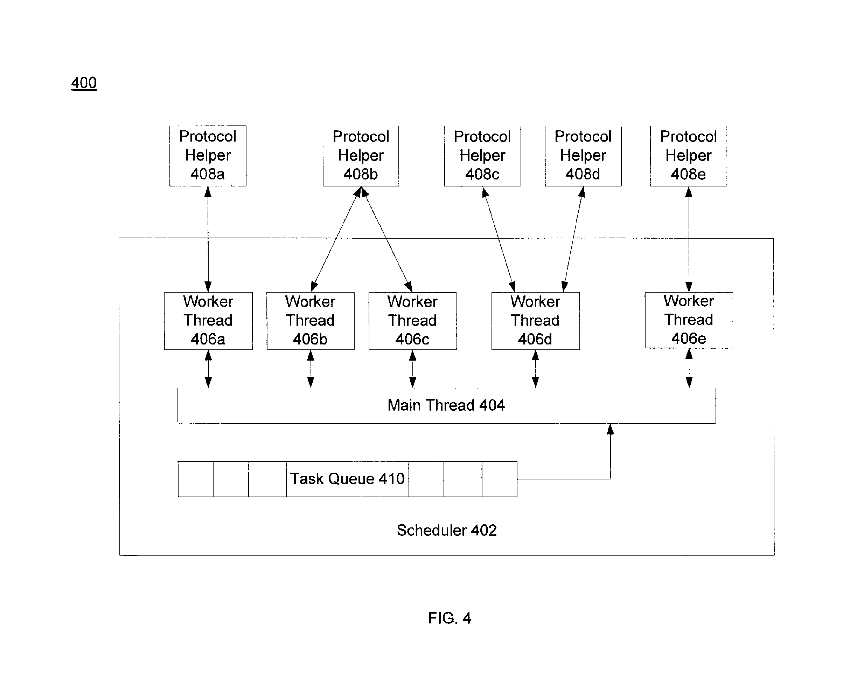

FIG. 4 illustrates a system 400 comprising components within a unified poller in further detail according to one embodiment of the present invention. System 400 includes a scheduler 402 and protocol helpers 408a, 408b, 408c, 408d, 408e (collectively referred to as 408). Scheduler 402 may further include main thread 404, worker threads 406a, 406b, 406c, 406d and 406e (collectively referred to as 406), and task queue 410. Scheduler 402 may receive one or more polling tasks, which the scheduler 402 may store in task queue 410. Polling tasks may be assigned specific priorities in determining placement of the polling tasks in task queue 410. Each worker thread associated with a polling task may also be allocated with a thread quantum. The quantum in which a given thread running a polling task is given may be based on a number of factors including, but not limited to, the time required for to perform or complete a task, the priority of the polling task, other concurrently running tasks either overall or on a same device or service, and any other heuristic or other information scheduler 402 may receive or otherwise utilize.

Polling tasks may be assigned to appropriate worker threads 406 by main thread 404. Worker threads 406 may either be created in response to new polling tasks or assigned from worker threads awakened from a sleeping state. A given worker thread 406 assigned a polling task may execute an instance of a poller and its instructions on the basis of an assigned polling task. Executing an instance of a poller may include referencing the poll handles as described above.

Thread management tasks are carried out by main thread 404. Instances of resource monitoring and management of polling tasks within scheduler 402 may be assigned directly by main thread 404. In one embodiment, the resource monitoring and management tasks associated with main thread 404 may also be stored in task queue 410. Other embodiments may include a separate task queue for main thread 404 and one or more polling task queues for worker threads 406. According to still further embodiment, a given protocol or device may each have its own respective task queues.

In executing a polling task, worker threads 406 may reference protocol helpers 408 for communication with a device communicating in a respective protocol. In one embodiment, a variable number of worker threads may be designated to tasks for certain protocols. As shown, worker threads 406b and 406c may be assigned to protocol helper 408b while protocol helper 408c and 408d may only be allocated with worker thread 406d. In an alternative embodiment, a variable number of worker threads may also be assigned according to a number of device types on a single protocol. The amount of worker threads assigned to a protocol or device may be dynamically determined on the basis of the amount of types of polling tasks according to protocol or device. According to one embodiment, worker threads may be reassigned from handling polling tasks for one protocol to another.

For example, protocols or devices that are infrequently monitored may share worker threads while busy protocols or devices may each be assigned a plurality of worker threads and given additional worker threads to fulfill incoming polling tasks and prevent bottlenecks. The need for additional processing resources may also be determined by examining the task queue to determine polling tasks of specific protocols or devices. In one embodiment, the amount of concurrent threads or polling tasks may hardcoded by a programmer. In another embodiment, threads may be manually configured during run-time by a system administrator. Scheduler 402 may also limit the amount of threads it is allowed to generate at a given time as too many threads may degrade overall system performance. In yet another embodiment, the scheduler 402 may limit the amount of concurrent threads or polling tasks for a given device.

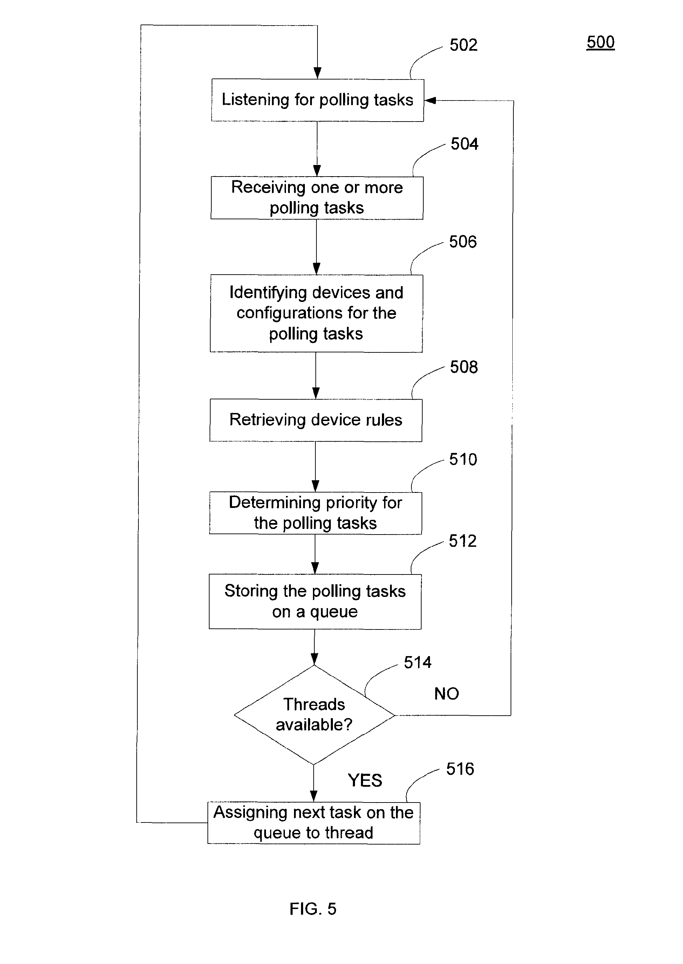

FIG. 5 presents a flowchart of a method 500 for scheduling polling tasks according to one embodiment of the present invention. The method of FIG. 5 may be executed by the systems of FIG. 2 through 4 or any other suitable processing environment. Incoming polling tasks are listened for, step 502, which may originate from pollers, entered by a system administrator, or from a task scheduler, either a scheduler within the unified poller or another scheduler within the system. The polling tasks may be periodically scheduled, automated or triggered by a certain event prompting a polling task. One or more polling tasks may be received, step 504. Rather than allowing a poller to freely poll any device at any given time, polling tasks may be received at a unified poller, which then delegates and allows the pollers to commence with given polling operations on respective devices.

Devices and configurations for the polling tasks are identified, step 506. For example, device identifiers associated with the polling tasks may be determined and used to look up device profiles in a device list repository. The device profiles may be retrieved from one or more table structures including values and entries for one or more devices including device information and configurations. Device rules are also retrieved, step 508, and may comprise custom rules and configurations according to customer specifications for specific devices.

Priority for the polling tasks may be determined, step 510. The priority of the polling tasks may be determined on the basis of the device information, configurations and rules. In addition, the priority of the polling tasks may also be determined according to a device type, protocol used, time required for the task, a customer-specified priority or a default priority according to any criteria established by the system. The polling tasks are stored on a queue, step 512, which may take place prior to assignment or execution of the polling tasks. Tasks may further be stored on the queue in an order determined according to the priority of the tasks.

A given polling task may be stored on the queue until one or more threads become available to service the given polling task, step 514. The one or more threads may run other existing polling tasks and the polling tasks may need to wait until the one or more threads finish. In one embodiment, a new thread may be created to execute the polling tasks. If there are no threads available, the method returns to step 502 to listen for additional polling tasks. Otherwise, a next task on the queue is assigned to an available thread, step 516. According to one embodiment, the next task is the task with the highest priority or the task that is placed on the top of the queue. The polling tasks are delegated and the pollers associated with the polling tasks are allowed to execute.

The scheduler of a unified poller may manage each polling task as to operate in the most efficient manner. For example, the scheduler may determine not to assign too many polling tasks to a given device at once. In another embodiment, the scheduler may dynamically reassign the priority of polling tasks stored on the task queue based on currently executing tasks. The scheduler may further assign threads to polling tasks based on feedback responses or information from pollers or from the result of polling tasks. After assigning the next task to the thread, the method may continue to step 502 to listen for more polling tasks. In another embodiment, after assigning the next task to the thread, the method may return to step 514 to determine whether more threads are available if there are additional polling tasks on the queue.

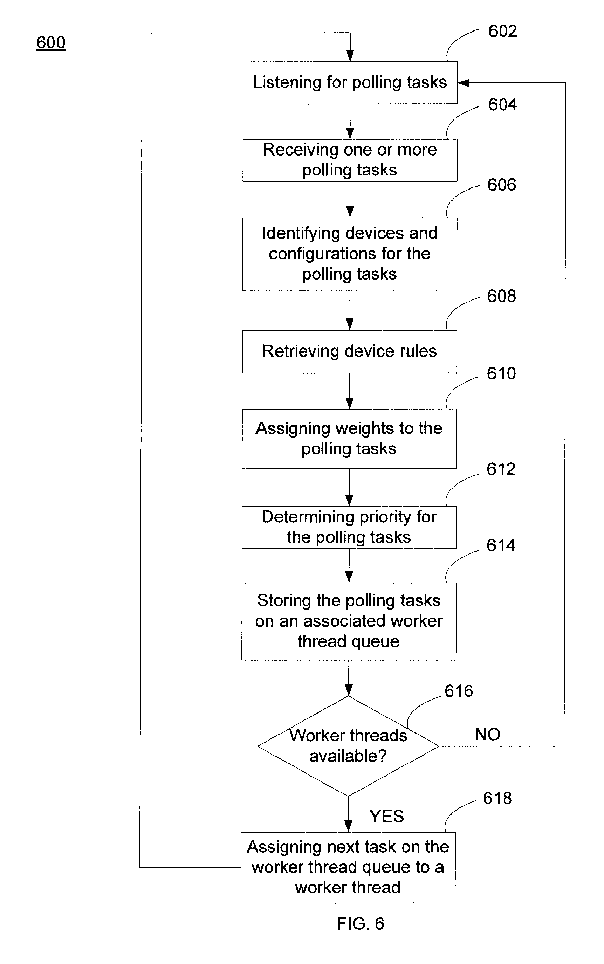

FIG. 6 illustrates another embodiment whereby scheduling polling tasks includes scheduling polling tasks to worker threads. In step 602, the method includes listening for polling tasks. One or more polling tasks are received, step 604, upon listening for polling tasks. Polling tasks may be received for monitoring a plurality of devices. A device and its associated configurations may be identified for the polling tasks, step 606. Device and configuration information may be identified so as to determine device function, protocol and one or more pollers associated with or compatible with the identified device or service. Device and configuration information may be retrieved from lookup tables on one or more device lists. In step 608, device rules are retrieved. The device and its configuration may also be used to find device rules that are defined for specific devices, which may be specified or customized according to customer specifications.

Weights are assigned to the polling tasks, step 610. The weights determined for the polling tasks may be on the basis of criteria including, but not limited to, the type of polling task, the importance of a device associated with a given polling task, the amount of time required for the given polling task, or any information stored in the lookup tables. Priority for the polling tasks are determined, step 612, with the priority of the polling tasks determining the importance and execution order of the polling tasks. The priority may be determined according to the device, its configuration and the device rules. Priority of the polling tasks may further be modified according to the weights assigned to the polling tasks.

The polling tasks are stored on an associated worker thread queue, step 614. In one embodiment, one or more worker threads may be assigned polling tasks from a queue. According to another embodiment there may be a plurality of queues designated to one or more specific worker threads. In the instances where there may be a plurality of worker thread queues, the polling tasks may be assigned to one of the plurality of worker thread queues on the basis of device type, protocol, or randomly. The availability of worker threads is determined, step 616, whereby worker threads may be assigned to specific types of polling tasks or devices. If no suitable worker threads are available, execution of method 600 may return to step 602 to listen for polling tasks. If there are suitable worker threads available, however, a next task on a worker thread queue is assigned to a worker thread associated with the worker thread queue, step 618. One of the polling tasks may possess the highest ranking priority and be the next task on the worker thread queue. Upon assigning the next task on the worker thread queue to a worker thread, the method of 600 may return to step 602.

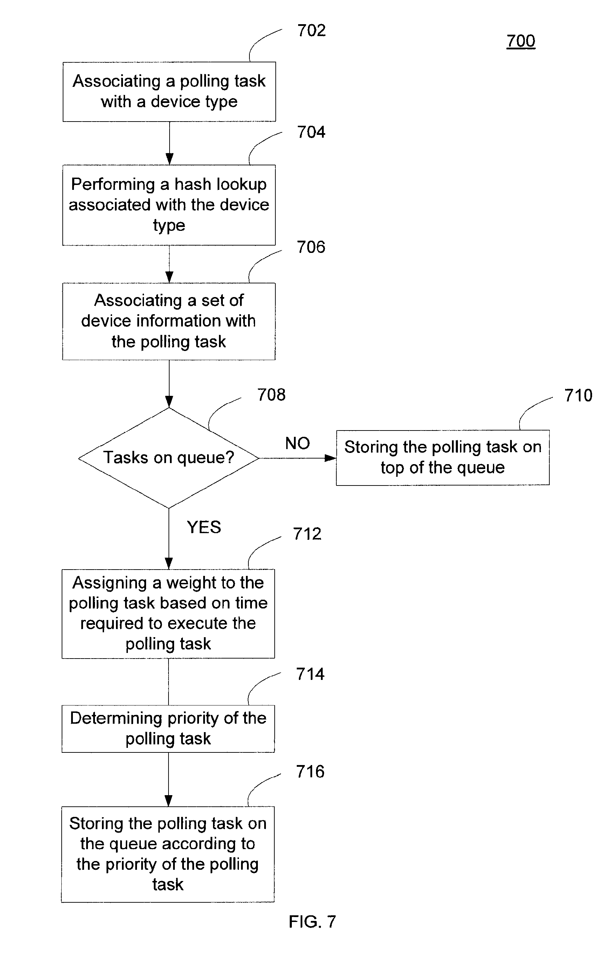

FIG. 7 illustrates a method 700 according to another embodiment of the present invention for scheduling polling tasks, including scheduling polling tasks on the basis of the type of polling task and device. A polling task is associated with a device type, step 702. The device type may be determined on the basis of the type of polling task or from a device identifier within the polling task. A hash lookup associated with the device type may be performed, step 704. The hash lookup may be performed on one or more tables in a device list containing device profiles associated with each device type, which may include information associated with the device such as device policies and configurations. A set of device information is associated with the polling task, step 706, which may include information from the device profiles, as well as any rules a customer may have specified for the particular device type.

A determination is made as to whether there are any tasks on the queue, step 708. Upon determining there are no tasks on the queue, the polling task is placed on top of the queue, step 710. If there are tasks on the queue, a weight is assigned to the polling task, which may be made on the basis of the time required to execute the polling task, step 712. The time required to execute a polling task may depend on the type of polling task as polling tasks times may be standardized for every device type or may be different for each device. Variable times for polling tasks may be included in the device profiles, which may also include times associated with any other tasks to be performed. According to one embodiment, if a polling task time does not exist within a device profile, an estimate time may be generated from a combination of tasks determined to be equivalent or otherwise similar to the polling task.

In a next step 714, the priority of the polling task is determined. The assigned weight may either increase or decrease the priority of execution of the polling task. According to one embodiment, polling tasks requiring shorter amounts of time to complete may be given higher priority over polling tasks requiring longer amounts of time to complete. Executing "lightweight" polling tasks may indicate a problem with a target device and necessitate the utilization of a smaller amount of resources than otherwise would have been wasted by executing subsequent, additional polling tasks. An indication of a problem with a target device may also prompt execution of a new set of polling tasks and re-prioritize any polling task on a polling task queue. When the priority of the polling task is determined, the polling task is stored on the queue according to the priority of the polling task, step 716. Polling tasks stored on the queue may be selected and assigned to threads for execution.

Figures 1 through 7 are conceptual illustrations allowing for an explanation of the present invention. It should be understood that various aspects of the embodiments of the present invention could be implemented in hardware, firmware, software, or combinations thereof. In such embodiments, the various components and/or steps would be implemented in hardware, firmware, and/or software to perform the functions of the present invention. That is, the same piece of hardware, firmware, or module of software could perform one or more of the illustrated blocks (e.g., components or steps).

In software implementations, computer software (e.g., programs or other instructions) and/or data is stored on a machine readable medium as part of a computer program product, and is loaded into a computer system or other device or machine via a removable storage drive, hard drive, or communications interface. Computer programs (also called computer control logic or computer readable program code) are stored in a main and/or secondary memory, and executed by one or more processors (controllers, or the like) to cause the one or more processors to perform the functions of the invention as described herein. In this document, the terms "machine readable medium," "computer program medium" and "computer usable medium" are used to generally refer to media such as a random access memory (RAM); a read only memory (ROM); a removable storage unit (e.g., a magnetic or optical disc, flash memory device, or the like); a hard disk; or the like.

Notably, the figures and examples above are not meant to limit the scope of the present invention to a single embodiment, as other embodiments are possible by way of interchange of some or all of the described or illustrated elements. Moreover, where certain elements of the present invention can be partially or fully implemented using known components, only those portions of such known components that are necessary for an understanding of the present invention are described, and detailed descriptions of other portions of such known components are omitted so as not to obscure the invention. In the present specification, an embodiment showing a singular component should not necessarily be limited to other embodiments including a plurality of the same component, and vice-versa, unless explicitly stated otherwise herein. Moreover, applicants do not intend for any term in the specification or claims to be ascribed an uncommon or special meaning unless explicitly set forth as such. Further, the present invention encompasses present and future known equivalents to the known components referred to herein by way of illustration.

The foregoing description of the specific embodiments will so fully reveal the general nature of the invention that others can, by applying knowledge within the skill of the relevant art(s) (including the contents of the documents cited and incorporated by reference herein), readily modify and/or adapt for various applications such specific embodiments, without undue experimentation, without departing from the general concept of the present invention. Such adaptations and modifications are therefore intended to be within the meaning and range of equivalents of the disclosed embodiments, based on the teaching and guidance presented herein. It is to be understood that the phraseology or terminology herein is for the purpose of description and not of limitation, such that the terminology or phraseology of the present specification is to be interpreted by the skilled artisan in light of the teachings and guidance presented herein, in combination with the knowledge of one skilled in the relevant art(s).

While various embodiments of the present invention have been described above, it should be understood that they have been presented by way of example, and not limitation. It would be apparent to one skilled in the relevant art(s) that various changes in form and detail could be made therein without departing from the spirit and scope of the invention. Thus, the present invention should not be limited by any of the above-described exemplary embodiments, but should be defined only in accordance with the following claims and their equivalents.

## Claims

1. A system for unified polling of networked devices and services, the system comprising:
one or more pollers in communication with one or more devices, the one or more pollers operative to request and perform one or more polling tasks of the one or more devices;
a unified poller in communication with the plurality of pollers, the unified poller operative to:
receive requests for one or more polling tasks;
determine priorities of the one or more polling tasks; and
assign one or more threads to control the one or more pollers on the basis of the priorities of the one or more polling tasks.

2. The system of claim 1 wherein the unified poller is further operative to schedule the one or more polling tasks on the basis of an amount of resources available at the one or more devices.

3. The system of claim 1 or 2 wherein the polling tasks are scheduled, automated or triggered by one or more events.

4. The system of claim 1, 2, or 3 wherein the unified poller is further operative to manage the one or more threads.

5. The system of claim 1, 2, 3, or 4 wherein the unified poller is further operative to assign weights to the priorities, a given weight based on a polling task completion time.

6. The system of claim 1, 2, 3, or 4 wherein the determined priorities are based on one or more device profiles.

7. The system of claim 1, 2, 3, or 4 wherein the unified poller is further operative to adjust the determined priorities according to a result of a prior polling task.

8. The system of claim 1, 2, 3, 4, 5, 6, or 7 wherein the unified poller is further operative to limit the amount of concurrent polling tasks performed on a given device.

9. A computer-implemented method for unified polling of networked devices and services, the method comprising:
receiving requests for one or more polling tasks at a unified poller;
electronically determining, via a processing device, priorities of the one or more polling tasks;
assigning, by the unified poller, one or more threads to control the one or more pollers on the basis of the priorities of the one or more polling tasks; and
electronically controlling, via the processing device, one or more pollers to perform the one or more polling tasks of the one or more devices

10. The method of claim 9 comprising scheduling the one or more polling tasks on the basis of an amount of resources available at the one or more devices.

11. The method of claim 9 or 10 comprising scheduling, automating or triggering the polling tasks in response to the occurrence of one or more events.

12. The method of claim 9,10, or 11 comprising assigning weights to the priorities, a given weight based on a polling task completion time.

13. The method of claim 9,10, or 11 wherein determining priorities is based on one or more device profiles.

14. The method of claim 9, 10, or 11 comprising adjusting the determined priorities according to a result of a prior polling task.

15. The method of claim 9, 10, 11, 12, 13, or 14 comprising limiting the amount of concurrent polling tasks performed on a given device.
